# EUROPEAN PATENT APPLICATION

(11) **EP 4 287 709 A1**
(43) Date of publication of application: **06.12.2023**
(21) Application number: 23175581.0
(22) Date of filing: 26.05.2023
(51) Int. Cl.: H04W 36/02, H04W 88/08

(54) **METHODS AND APPARATUS TO IMPROVE UE EXPERIENCE DURING INTER-DU INTER-CELL BEAM MANAGEMENT**

(30) Priority: 02.06.2022 WO PCT/CN2022/096896; 11.05.2023 CN 202310531008
(71) Applicant: MediaTek Singapore Pte. Ltd., Singapore 138628 (SG)
(72) Inventor: ZHANG, Yuanyuan, Beijing (CN); ZHANG, Xiaonan, Beijing (CN)
(74) Representative: Hoefer & Partner Patentanwälte mbB

(57) **Abstract**

Apparatus and methods are provided for inter-DU inter-cell cell switch with beam management. In one novel aspect, the UE receives a cell switch command (1201), performs RLC reestablishment (1202) and MAC reset (1203), sends a PDCP status report to indicate one or more PDCP protocol data units, PDUs, failed for a downlink, DL, or UL data transfer to the source cell for unacknowledged mode, UM, or acknowledge mode, AM, radio bearers (1204), and performs a UE self-detected PDCP retransmission for UL data transfer when the UE detects one or more source-failed UL PDCP PDUs (1205). The PDCP entity performs PDCP retransmission to the target cell. In one embodiment, the RLC entity identifies source-failed PDUs. In another embodiment, UE sends the pending RLC PDUs the PDCP entity and the PDCP entity identifies the source-failed PDUs. In one embodiment, UE triggers, compiles, and sends PDCP status report to the target cell. In one embodiment, the MAC reset controls a source TAG and keeps a timeAlginement timer associated with the source running.

## Description

### TECHNICAL FIELD

The disclosed embodiments relate generally to wireless communication, and, more particularly, to improve UE experience during inter-DU inter-cell beam management.

### BACKGROUND

In a conventional network of the 3rd generation partnership project (3GPP) 5G new radio (NR), when a user equipment(UE) moves from the coverage area of one cell to that of another cell, at some points a serving cell change needs to be performed. Currently the serving cell change is triggered by layer three (L3) measurements and is done by a radio resource control (RRC) reconfiguration signaling with synchronization for change of primary cell (PCell) and primary and secondary cell (PSCell), as well as release/add for secondary cells (SCells) when applicable. The cell switch procedures involve complete L2 (and L1) resets, which cause longer latency, larger overhead and longer interruption time than beam switch mobility. To reduce the latency, overhead and interruption time during UE mobility, the mobility mechanism can be enhanced to enable a serving cell to change via beam management with L1/L2 signaling. The L1/L2 based inter-cell mobility /L1/L2-triggered Mobility(LTM)for inter-cell with beam management should support different scenarios, including intra- distributed unit (DU) / inter-DU inter-cell mobility change, FR1/FR2, intra-frequency / inter-frequency, and source and target cells may be synchronized or non-synchronized.

In the legacy handover (HO) design controlled by a series of L3 procedures including radio resource management (RRM) measurement and RRC Reconfiguration, ping-pong effects should be avoided with relatively long time of stay(ToS) in order to reduce the occurrences of HOs, accompanied with which is the reduce of signaling overhead and interruption during the overall lifetime of a RRC connection. However, the drawback is that UE cannot achieve the optimized instantaneous throughput if the best beam does not belong to the serving cell. With the development of Ll/L2-based inter-cell mobility with beam management, the UE makes more decisions in preventing data loss during the cell switch.

Improvements and enhancements are required for inter-DU cell switch to improve UE experience.

### SUMMARY

Apparatus and methods are provided for inter-DU inter-cell cell switch with beam management. A method and a user equipment according to the invention are defined in the independent claims. The dependent claims define preferred embodiments thereof. In one novel aspect, the UE receives a cell switch command, performs a RLC reestablishment and a MAC reset, sends a PDCP status report to indicate one or more PDCP protocol data units (PDUs) failed for a downlink (DL) or UL data transfer to the source cell for unacknowledged mode (UM) or acknowledge mode (AM) radio bearers, and performs a UE self-detected PDCP retransmission for UL data transfer when the UE detects one or more source-failed UL PDCP PDUs. The source-failed UL PDCP PDUS are the UL PDCP PDUs that failed to deliver to the source cell or have not been transmitted to the source cell during the cell switch. The UE self-detected PDCP retransmission retransmits the identified source-failed PDCP PDUs to the target cell.

In one embodiment, UE receives a cell switch command from a gNB in a wireless network, wherein the cell switch command indicates a layer-2 (L2) cell switch from a source cell to a target cell, and wherein the source cell and the target cell belong to two different DUs. The UE performs an RLC re-establishment by an RLC entity of the UE. The UE performs a MAC reset by a MAC entity of the UE. The UE sends a PDCP status report by a PDCP entity of the UE in an uplink (UL) to the target cell to indicate one or more PDCP protocol data units (PDUs) failed for a downlink (DL) or UL data transfer to the source cell for unacknowledged mode (UM) or acknowledge mode (AM) radio bearers. The UE performs a UE self-detected PDCP retransmission for UL data transfer when the UE detects one or more source-failed UL PDCP PDUs that failed to be sent to the source cell, and wherein the UE self-detected PDCP retransmission retransmits the one or more source-failed UL PDCP PDUs to the target cell when one or more conditions are met.

In one preferred embodiment, the cell switch command is carried by a MAC entity or a PDCCH. Preferably, the MAC entity sends a cell switch indication to a RRC entity and the RRC entity sends a RRC request to a RLC and PDCP entity of the UE for cell switch. Preferably, UE needs to identify the PDCP PDUs which are not successfully delivered or not transmitted to the source cell before performing a RLC reestablishment when receiving the cell switch command. In one preferred implementation, the RLC entity identifies the information on the source-failed PDCP PDUs. In another preferred implementation, UE sends the RLC SDUs, RLC SDU segments, RLC data PDUs that are pending for initial transmission back to the PDCP entity and the PDCP entity identifies which PDCP PDUs are not successfully delivered or not transmitted to the source cell. Preferably, the PDCP entity performs PDCP retransmission to the target cell. Preferably, UE triggers, compiles, and sends a PDCP status report to the target cell.

In one preferred embodiment, the MAC reset stores and controls a source timing advance group (TAG) associated with the source cell. Preferably, the MAC entity keeps a timeAlignement timer associated with the source cell running. Alternatively or additionally preferably, the MAC reset keeps a beamFailureDection timer associated with the source cell running. Preferably, the UE self-detected PDCP retransmission involves determining whether to retransmit the one or more source-failed UL PDCP PDUs based on a comparison of a number of source-failed UL PDCP PDUs with a preconfigured source-failed threshold.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1A is a schematic system diagram illustrating an exemplary wireless network for inter-DU inter-cell beam management in accordance with embodiments of the current invention.
Figure 1B illustrates HOF of legacy HO and L1/L2 based inter-cell mobility with beam management.
Figure 1C illustrates Ping-pong of legacy HO and L1/L2 based inter-cell mobility with beam management.
Figure 1D illustrates tiem to stay (ToS) of legacy HO and L1/L2 based inter-cell mobility with beam management.
Figure 2 illustrates an exemplary NR wireless system with centralized upper layers of the NR radio interface stacks in accordance with embodiments of the current invention.
Figure 3 illustrates an exemplary deployment scenario for intra-DU inter-cell beam management in accordance with embodiments of the current invention.
Figure 4 illustrates an exemplary deployment scenario for inter-DU inter-cell beam management in accordance with embodiments of the current invention.
Figure 5 illustrates an exemplary process for UP handling for inter-DU inter-cell beam management in accordance with embodiments of the current invention.
Figure 6 illustrates an exemplary process for inter-DU inter-cell beam management with mobility from both network and the UE side in accordance with embodiments of the current invention.
Figure 7A illustrates an exemplary interaction between different layers at the UE side to initiate UP process upon reception of the cell switch command when the MAC sends an indication to the RRC layer in accordance with embodiments of the current invention.
Figure 7B illustrates an exemplary interaction between different layers at the UE side to initiate UP process upon reception of the cell switch command when the MAC sends an indication to the PDCP and the RLC layers in accordance with embodiments of the current invention.
Figure 8 illustrates an exemplary process of DL data transfer for inter-DU inter-cell beam management with mobility from both network and the UE side in accordance with embodiments of the current invention.
Figure 9 illustrates an exemplary process of UL data transfer for inter-DU inter-cell beam management with mobility from both network and the UE side in accordance with embodiments of the current invention.
Figure 10 illustrate an exemplary process of UP handling at the UE side for inter-DU inter-cell beam management in accordance with embodiments of the current invention.
Figure 11A illustrate an exemplary process of source UD initiated DL data transfer at the network side for inter-DU inter-cell beam management in accordance with embodiments of the current invention.
Figure 11B illustrate an exemplary process of CU-initiated DL data transfer at the network side for inter-DU inter-cell beam management with mobility from in accordance with embodiments of the current invention.
Figure 12 illustrates an exemplary flow chart of inter-DU inter-cell beam management with UE PDCP status report and retransmission in accordance with embodiments of the current invention.

### DETAILED DESCRIPTION

Reference will now be made in detail to some embodiments of the invention, examples of which are illustrated in the accompanying drawings.

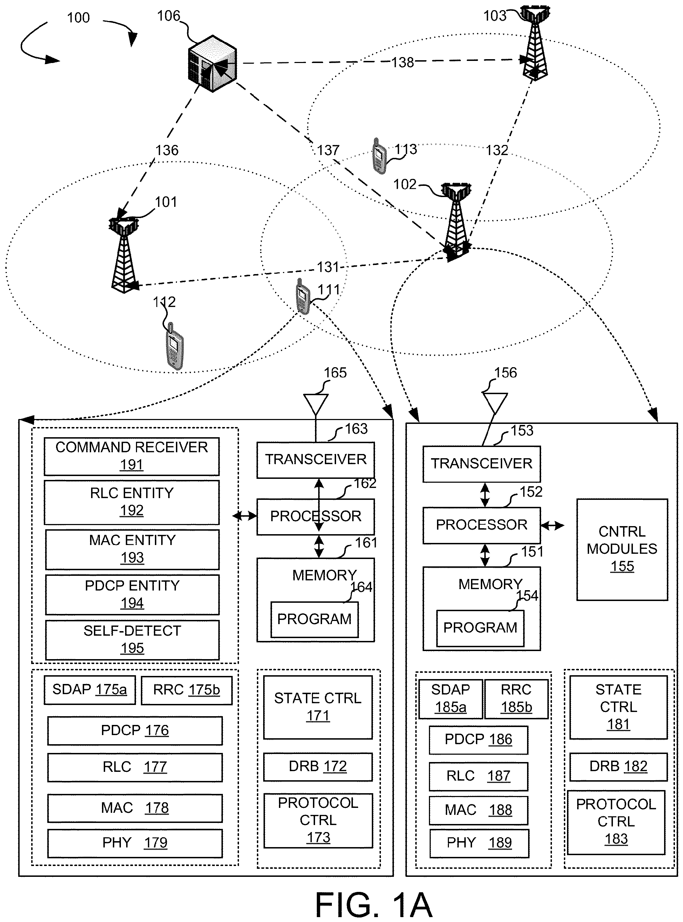

Figure 1A is a schematic system diagram illustrating an exemplary wireless network for inter-DU inter-cell beam management in accordance with embodiments of the current invention. Wireless system 100 includes one or more fixed base infrastructure units forming a network distributed over a geographical region. As an example, base stations/gNBs 101, 102, and 103 serve a number of mobile stations, such as UE 111, 112, and 113, within a serving area, for example, a cell, or within a cell sector. In some systems, one or more base stations are coupled to a controller forming an access network that is coupled to one or more core networks, through a network entity, such as network entity 106. gNB 101, gNB 102 and gNB 103 are base stations in NR, the serving area of which may or may not overlap with each other. As an example, UE or mobile station 112 is only in the service area of gNB 101 and connected with gNB 101. UE 112 is connected with gNB 101 only. UE 111 is in the overlapping service area of gNB 101 and gNB 102 and may switch back and forth between gNB 101 and gNB 102. UE 113 is in the overlapping service area of gNB 102 and gNB 103 and may switch back and forth between gNB 102 and gNB 103. Base stations, such as gNB 101, 102, and 103 are connected the network through network entities, such as network entity 106 through NG connections, such as 136, 137, and 138, respectively. Xn connections 131 and 132 connect the non-co-located receiving base units. Xn connection 131 connects gNB 101 and gNB 102. Xn connection 132 connects gNB 102 and gNB 103. These Xn/NG connections can be either ideal or non-ideal.

When the UE, such as UE 111, is in the overlapping area, L1/L2-based inter-cell mobility is performed. For L1/L2 based inter-cell mobility with beam management, the network can take advantage of ping-pong effects, i.e., cell switching back and forth between the source and target cells, to select the best beams among a wider area including both the source cell and target cell for throughput boosting during UE mobility. L1/L2 based inter-cell mobility is more proper for the scenarios of intra-DU and inter-DU cell change. Ping-pong effect is not concerned in those scenarios. For intra-DU cell change, there is no additional signaling/latency needed at the network side. For inter-DU cell change, the F1 interface between DU and CU can support high data rate with a short latency. L1/L2 based inter-cell mobility is supportable considering the F1 interface latency is 5ms.

Figure 1A further illustrates simplified block diagrams of a base station and a mobile device/UE for inter-DU inter-cell beam management. gNB 102 has an antenna 156, which transmits and receives radio signals. A radio frequency(RF) transceiver circuit 153, coupled with the antenna 156, receives RF signals from antenna 156, converts them to baseband signals, and sends them to a processor 152. RF transceiver 153 also converts received baseband signals from processor 152, converts them to RF signals, and sends out to antenna 156. Processor 152 processes the received baseband signals and invokes different functional modules to perform features in gNB 102. Memory 151 stores program instructions and data 154 to control the operations of gNB 102. gNB 102 also includes a set of control modules 155 that carry out functional tasks to communicate with mobile stations. An RRC state controller 181 performs access control for the UE. A data radio bearer(DRB) controller 182 performs control functions to establish/add, reconfigure/modify, and release/remove a DRB based on different sets of conditions for DRB establishment, reconfiguration and release. A protocol stack controller 183 manages to add, modify or remove the protocol stack for the DRB. The protocol Stack includes PHY layer 189, MAC layer 188, RLC layer 187, PDCP layer 186 , SDAP layer 185a for the user plane and RRC layer 185b for the control plane.

UE 111 has an antenna 165, which transmits and receives radio signals. An RF transceiver circuit 163, coupled with the antenna, receives RF signals from antenna 165, converts them to baseband signals, and sends them to a processor 162. Preferably, the RF transceiver 163 may comprise two RF modules (not shown) for different frequency bands. RF transceiver 163 also converts received baseband signals from processor 162, converts them to RF signals, and sends out to antenna 165. Processor 162 processes the received baseband signals and invokes different functional modules to perform features in the UE 111. Memory 161 stores program instructions and data 164 to control the operations of the UE 111. Antenna 165 sends uplink transmission and receives downlink transmissions to/from antenna 156 of gNB 102.

UE 111 also includes a set of control modules that carry out functional tasks. These control modules can be implemented by circuits, software, firmware, or a combination of them. An RRC State controller 171 controls UE's RRC state according to network's command and UE conditions. UE supports the following RRC states, RRC_IDLE, RRC_CONNECTED and RRC_INACTIVE. A DRB controller 172 controls to establish/add, reconfigure/modify and release/remove a DRB based on different sets of conditions for DRB establishment, reconfiguration, and release. A protocol stack controller 173 manages to add, modify, or remove the protocol stack for the DRB. The protocol Stack includes SDAP layer 175a for the user plane, RRC layer 175b for the control plane, PDCP layer 176, RLC layer 177, MAC layer 178 and PHY layer 179. A command receiving module 191 receives a cell switch command from a gNB in the wireless network, wherein the cell switch command indicates a layer-2 (L2) cell switch from a source cell to a target cell, and wherein the source cell and the target cell belong to two different DUs. An RLC entity 192 performs an RLC re-establishment by an RLC entity of the UE. A MAC entity 193 performs a MAC reset. A PDCP entity 194 sends a PDCP status report in an uplink (UL) to the target cell indicating one or more PDCP protocol data units (PDUs) failed for a downlink (DL) or UL data transfer to the source cell for unacknowledged mode (UM) or acknowledge mode (AM) radio bearers. A self-detect module 195 performs a UE self-detected PDCP retransmission for UL data transfer when the UE detects one or more source-failed UL PDCP PDUs that failed to be sent to the source cell, and wherein the UE self-detected PDCP retransmission retransmits the one or more source-failed UL PDCP PDUs to the target cell when one or more conditions are met.

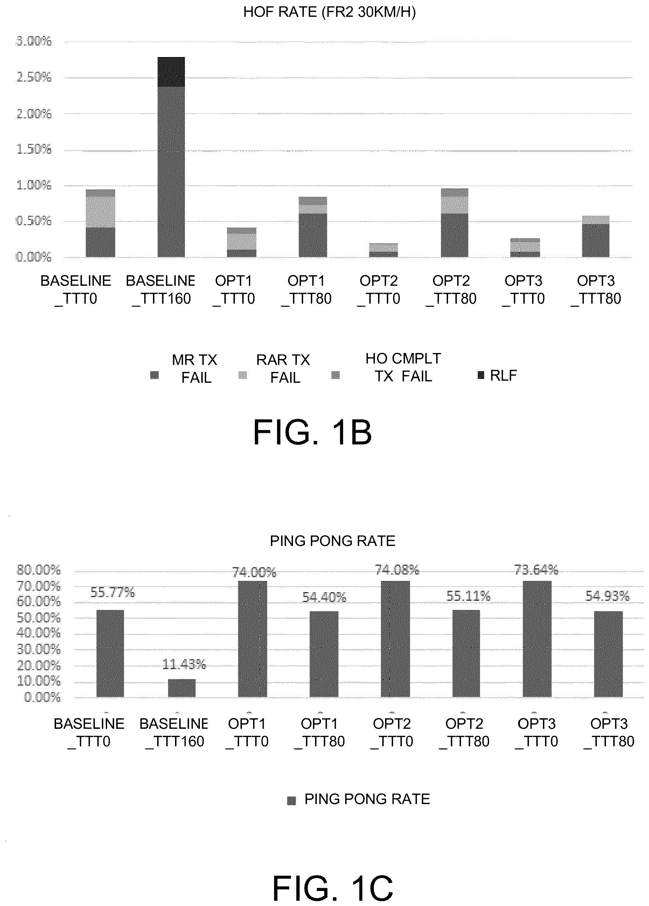

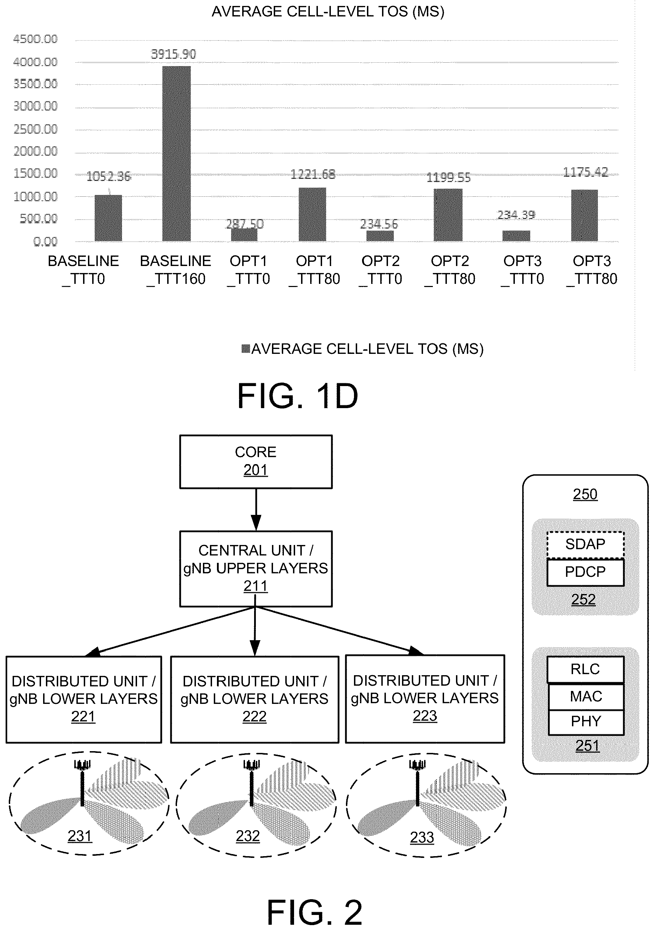

For the scenario of inter-DU handover, legacy handover procedure always triggers RLC re-establishment and MAC reset. All the packets in RLC and MAC which are not successfully delivered before handover execution are discarded. Since lossless data transmission should be guaranteed for AM DRBs, those PDCP PDUs which are not successfully delivered will be retransmitted after handover to target cell. For UM DRBs, data loss is allowed during handover and the PDCP PDUs which are not successfully delivered will not be retransmitted after handover and considered as lost. However, for inter-DU inter-cell beam management with mobility, the existing user plane (UP) handling method through RLC re-establishment and MAC reset will cause serious problems. Due to high ping-pong rate and short time of stay (ToS), frequency user plane (UP) reset will result in frequent data retransmission for AM DRBs and large number of data loss for UM DRBs, which will finally impair User experience. Figures 1B, 1C and 1D provides performance data to illustrate the ping pong effect and ToS under different settings.

We run system level simulation to compare the mobility performance in terms of handover failure (HOF) rate, radio link failure (RLF) rate, handover interruption time (HIT), Ping Pong rate and/or ToS. Figure 1B illustrates HOF rate of legacy HO and L1/L2 based inter-cell mobility with beam management.. The HOF may include measurement report (MR) TX fail, random access response (RAR) RX fail, HO complete TX fail and RLF. Option #1, #2, #3 are different options for L1/L2 based inter-cell mobility with beam management, which have different latency to perform handover or cell switch from the source cell to the target cell. The cell switch latency of option #1, #2 and #3 are 45ms, 25ms and 5ms, respectively. The baseline represents the normal handover procedure under time to trigger of 0ms(TTTO) or 160ms (TTT160), which is performed through a sequence of L3 procedures. The handover latency is 75ms in the typical case in FR2. In Figure 1B, it can be observed that HOF rate can be reduced dramatically by L1/L2 based inter-cell mobility with beam management under TTTO or TTT80(i.e., TTT=80ms). The shorter the latency, the better the HOF rate.

Figure 1C illustrates ping-pong rate of legacy HO and L1/L2 based inter-cell mobility with beam management. The L1/L2 based inter-cell mobility with beam management can result in high ping-pong rate. The baseline represents the normal handover procedure under TTTO or TTT160. As shown the ping-pong rate increases from 55.77% in legacy handover to 74% in L1/L2 based inter-cell mobility with beam management. The consequence of the high ping-pong rate is the short ToS.

Figure 1D illustrates ToS of legacy HO and L1/L2 based inter-cell mobility with beam management. The baseline represents the normal handover procedure under TTTO or TTT160. The average ToS can be reduced to about 200ms in the L1/L2 based inter-cell mobility with beam management. For the mechanism of L1/L2 based inter-cell mobility with beam management, the network can take advantage of ping-pong effects, i.e., cell switching back and forth between the source and target cells, to select the best beams among a wider area including both the source cell and target cell for throughput boosting during UE mobility. L1/L2 based inter-cell mobility is more proper for the scenarios of intra-DU and inter-DU cell changes. Ping-pong effect is not concerned in those scenarios. For intra-DU cell change, there is no additional signalling/latency needed at the network side. For inter-DU cell change, the F1 interface between DU and CU can support high data rate with short latency. L1/L2 based inter-cell mobility is supportable considering the F1 interface latency is 5ms.

With the illustrated new characteristics of the cell switch, especially for inter-DU cases, with beam management (as shown in Figures 1B, 1C and 1D), the legacy way of triggering RLC re-establishment and MAC reset requires improvement. In one novel aspect, the RLC reestablishment and MAC reset are controlled by the PDCP entity. A UE-initiated PDCP status report is triggered indicating PDCP PDUs failed for DL or UL data transfer during the cell switch. The PDCP status report from the UE triggers PDCP retransmission. In another novel aspect, the UE self-detected PDCP retransmission is triggered for UL data transfer during cell switch when the UE detects one or more source-failed UL PDCP PDUs that failed to be sent to the source cell, and wherein the UE self-detected PDCP retransmission retransmits the one or more source-failed UL PDCP PDUs to the target cell when one or more conditions are met. The UE detects source-failed UL PDCP PDUs when the PDCP PDUs have not been successfully delivered or have not yet been transmitted to the source cell.

Figure 2 illustrates an exemplary NR wireless system with centralized upper layers of the NR radio interface protocol stacks in accordance with embodiments of the current invention. Different protocol split options between central unit (CU) and distributed unit (DU) of gNB may be possible. The functional split between the CU and DU of gNB may depend on the transport layer. Low performance transport between the CU and DU of gNB can enable the higher protocol layers of the NR radio stacks to be supported in the CU, since the higher protocol layers have lower performance requirements on the transport layer in terms of bandwidth, delay, synchronization and jitter. Preferably, SDAP and PDCP layer are located in the CU, while RLC, MAC and PHY layers are located in the DU. A Core unit 201 is connected with one central unit 211 with gNB upper layer 252. Preferably 250, gNB upper layer 252 includes the PDCP layer and optionally the SDAP layer. Central unit 211 is connected with distributed units 221, 222, and 221. Distributed units 221, 222, and 223 each corresponds to a cell 231, 232, and 233, respectively. The DUs, such as 221, 222 and 223 include gNB lower layers 251. Preferably 250, gNB lower layers 251 include the PHY, MAC and the RLC layers.

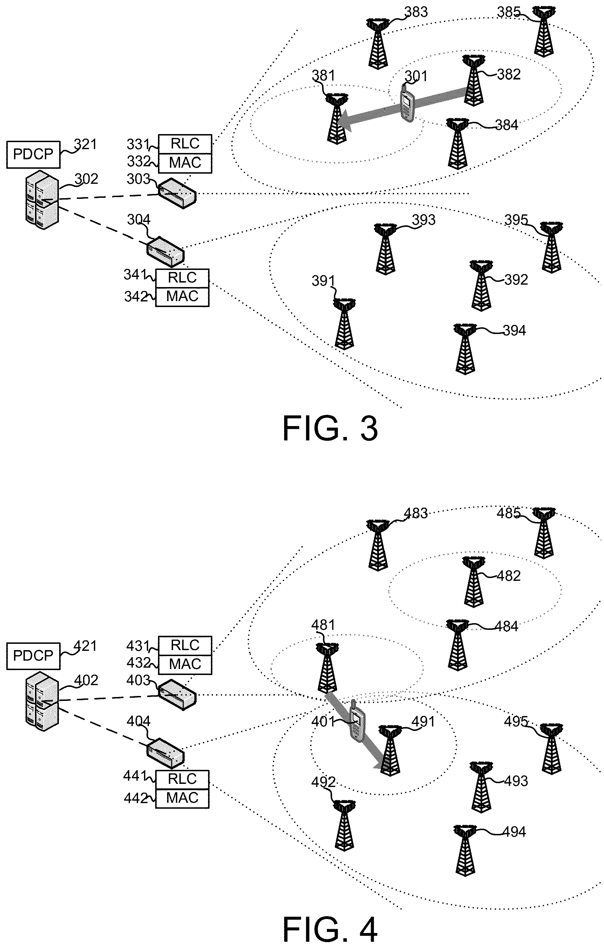

Figure 3 illustrates an exemplary deployment scenario for intra-DU inter-cell beam management in accordance with embodiments of the current invention. A CU 302 is connected to two DUs 303 and 304 through the F1 interface. CU 302 includes protocol stack PDCP layer 321. DU 303 includes protocol stack RLC layer 331 and MAC layer 332. DU 304 includes protocol stack RLC layer 341 and MAC layer 342. DU 303 and DU 304 are connected to multiple radio units (RUs) respectively. A cell may consist of a range covered by one or more RUs under the same DU. RUs / gNBs 381, 382, 383, 384, and 385 are connected with DU 303. RUs / gNBs 391, 392, 393, 394, and 395 are connected with DU 304. In this scenario, a UE 301 is moving from the edge of one cell served by gNB 382 to another cell served by gNB 381, which two belong to the same DU 303 and share a common protocol stack. Intra-DU inter-cell beam management can be used in this scenario to replace the legacy handover process to reduce the interruption and improve the throughput of UE. Preferably, a single protocol stack at the UE side (common RLC/MAC) is used to handle L1/L2 inter-cell beam management with mobility.

Figure 4 illustrates an exemplary deployment scenario for inter-DU inter-cell beam management in accordance with embodiments of the current invention. A CU 402 is connected to two DUs, DU 403 and DU 404 through the F1 interface, respectively. CU 402 includes protocol stack PDCP layer 421. DU 403 includes protocol stack RLC layer 431 and MAC layer 432. DU 404 includes protocol stack RLC layer 441 and MAC layer 442. DU 403 and DU 404 are connected to multiple RUs respectively. A cell may consist of a range covered by one or more RUs under the same DU. RUs / gNBs 481, 482, 483, 484, and 485 are connected with DU 403. RUs / gNBs 491, 492, 493, 494, and 495 are connected with DU 404. In this scenario, a UE 401 is moving from the edge of one cell served by gNB 481 to another cell served by gNB 491, which belong to different DUs, DU 403 and DU 404, respectively, and share a common CU 402. The low layer user plane (RLC, MAC) is different in two DUs while high layer (PDCP) remains the same. Inter-DU inter-cell beam management can be used in this scenario to replace the legacy handover process to reduce the interruption and improve the throughput of UE. Preferably, a single protocol stack at the UE side (common RLC/MAC) is used to handle L1/L2 inter-cell beam management with mobility. Alternatively preferably, dual protocol stack at the UE side (separate RLC/MAC) are used to handleL1/L2 inter-cell beam management with mobility.

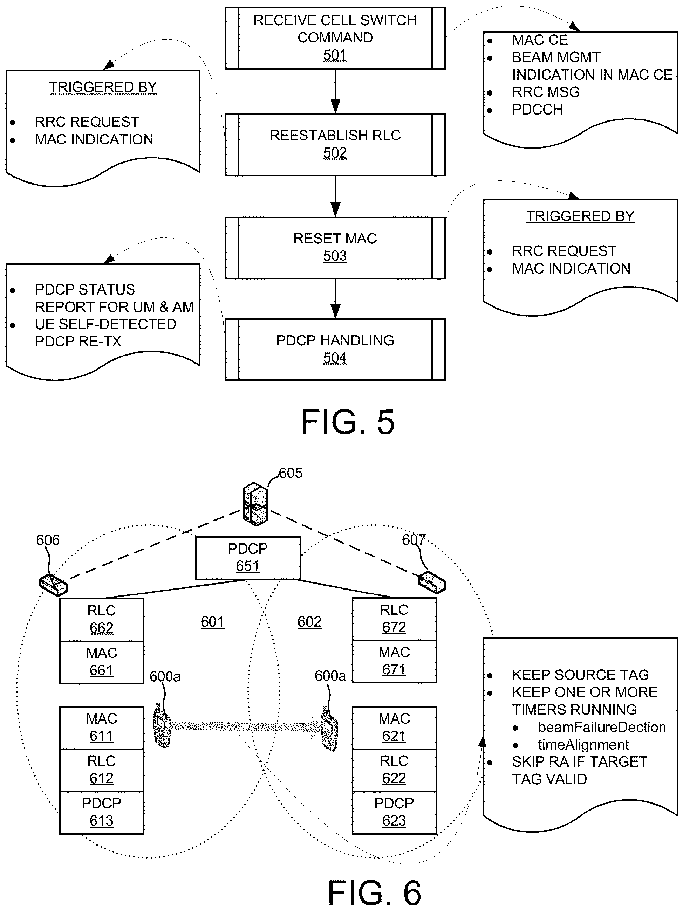

Figure 5 illustrates an exemplary process for UP handling for inter-DU inter-cell beam management in accordance with embodiments of the current invention. At step 501, the UE receives a cell switch command from the network during mobility. Preferably, the cell switch command is sent by MAC CE. Preferably, the cell switch command is sent together with beam management indication by MAC CE. Alternatively or additionally preferably, the cell switch command is sent by RRC message. Alternatively or additionally preferably, the cell switch command is sent by PDCCH. Upon reception of the cell switch command, at step 502, the UE re-establishes the RLC entity for each RB; at step 503, the UE reset MAC and at step 504, the UE performs PDCP handling. In one preferred implementation, the RLC re-establishment is triggered by the RRC request from the RRC entity of the UE. The RRC request from the RRC entity is triggered upon receiving a cell switch indication from the MAC entity. Optionally, the MAC reset is also triggered by the RRC request. In another or the same preferred implementation, the RLC re-establishment and/or the MAC reset are triggered by a cell switch indication directly from the MAC entity. Preferably, the PDCP status report is sent by the UE in UM or AM mode for DL and UL data transfer during cell switch. In another or the same preferred implementation, the UE self-detected PDCP retransmission to the target cell is performed upon detecting one or more source-failed UL PDCP PDUs. The UE detects source-failed UL PDCP PDUs when the PDCP PDUs have not been successfully delivered or have not yet been transmitted to the source cell. The source-failed UL PDCP PDUs are retransmitted by the UE to the target cell. Preferably, the cell switch command includes an indication to enable or disable the UE self-detected PDCP retransmission.

Figure 6 illustrate an exemplary process for inter-DU inter-cell beam management with mobility from both network and the UE perspective in accordance with embodiments of the current invention. A UE 600a at source cell (601) is configured with source protocol stack of MAC 611, RLC 612 and PDCP 613. Source cell has a DU 606 with a protocol stack of MAC 661 and RLC 662. UE 600a with a target protocol stack of MAC 621, RLC 622, and PDCP 623 switches to target cell (602). Target cell has a DU 607 with a protocol stack of MAC 671 and RLC 672. DU 606 and DU 607 is connected with CU 605. CU 605 has a protocol stack of PDCP 651. At the very beginning, UE is connected to the source cell 601. When UE moves towards the target cell 602, the pre-configuration for a list of candidate cells or the target cell is provided, which contains at least the cell identity, the physical resource configurations, e.g., PRACH resource, the MAC configuration, etc.. When UE moves at the edge of the source cell, the network decides to perform cell switch and change the serving cell from the source cell to the target cell. Then network sends a cell switch command to the UE. UE performs RLC re-establishment and MAC reset for cell switch. The PDCP handling is enhanced to avoid data loss during the L1/L2 triggered mobility for inter-DU cell switch.

Preferably, there is one MAC entity to support L1/L2 inter-cell mobility with beam management. Preferably, the MAC entity controls two timing advance groups (TAGs) associated to the first cell and the second cell respectively. Preferably, the two TAGs are primary timing advance groups (pTAGs). Preferably, the MAC entity controls two *beamFailureDetection* timers associated to the first cell and the second cell respectively. Preferably, the first cell is the source cell, and the second cell is the target cell. Preferably, UE is switched back-and-forth between the first and second cell. If UE is switched back from the second cell to the first cell, the second cell is considered as source cell and the first cell is considered as the target cell. The UL time alignment status of the first and the second cell is controlled by the time alignment timer(TAT) of the associated TAG. Preferably, UE performs MAC reset upon reception of the cell switch command from the network. Preferably, a particular MAC reset procedure is performed for cell switch. In the MAC reset procedure, UE keeps the *timeAlignment Timer* of the TAG associated with the source cell running, i.e., stops (if running) all timers, except *timeAlignment Timer* of the TAG associated with the source cell. Preferably, UE further keeps *beamFailureDetection Timer* associated with the source cell running. Preferably, UE stops (if running) all timers, except *beamFailureDetection Timer* and *timeAlignmentTimer* associated to the source cell. Preferably, when the UE performs cell switch in the case of that the TAG associated with the target cell is valid and the timeAlignment timer of the TAG is running, the UE skips the random access (RA) procedure for target cell.

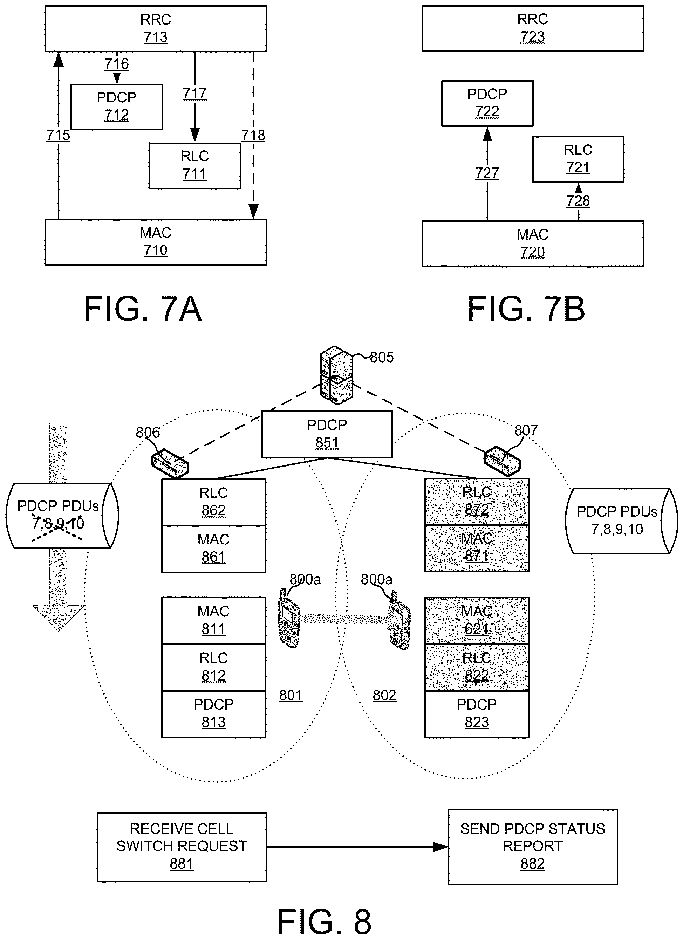

Figure 7A illustrates an exemplary interaction between different layers at the UE side to initiate UP process upon reception of the cell switch command when the MAC sends an indication to the RRC layer in accordance with embodiments of the current invention. The UE has a MAC entity 710, an RLC entity 711, a PDCP entity 712 and an RRC entity 713. Preferably, the cell switch command is received through MAC CE or PDCCH. Upon reception of the cell switch command, at step 715, the MAC entity 710 sends the indication of cell switch to RRC layer. RRC entity 713, at step 717, sends a cell switch request to the RLC entity 711 to perform RLC re-establishment, so the RLC entity perform RLC reestablishment upon requested by RRC. RRC entity 713, at step 716, sends the indication of cell switch to the PDCP entity 712 to trigger PDCP handling, so the PDCP entity 712 initiates PDCP handling when RRC request cell switch. In one preferred implementation, the PDCP entity 712 sends a PDCP status report and/or performs PDCP data recovery. In another or the same preferred implementation, the PDCP entity 712 performs PDCP data recovery for RLC UM DRBs. Preferably, at step 718, RRC entity 713 further sends the request to the MAC entity 710, and the MAC entity 710 performs MAC reset for cell switch.

Figure 7B illustrates an exemplary interaction between different layers at the UE side to initiate UP process upon reception of the cell switch command when the MAC sends an indication to the PDCP and the RLC layers in accordance with embodiments of the current invention. The UE has a MAC entity 720, an RLC entity 721, a PDCP entity 722 and an RRC entity 723. Upon reception of the cell switch command, the MAC entity 720, at step 728, sends the indication of cell switch to the RLC entity 721, so the RLC entity 721 perform RLC reestablishment upon requested by MAC. The MAC entity 720, at step 727, also sends the indication of cell switch to the PDCP entity 722, so the PDCP entity 722 initiates PDCP handling when MAC requests cell switch. In one preferred implementation, the PDCP entity 722 sends a PDCP status report and/or performs PDCP data recovery. In another or the same preferred implementation, the PDCP entity 722 performs PDCP data recovery for RLC UM DRBs. Preferably, the MAC entity 720 initiates and performs MAC reset for cell switch.

Figure 8 illustrates an exemplary process of DL data transfer for inter-DU inter-cell beam management with mobility from both network and the UE perspective in accordance with embodiments of the current invention. A UE 800a at source cell (801) is configured with source protocol stack of MAC 811, RLC 812 and PDCP 813. Source cell 801 has a DU 806 with a protocol stack of MAC 861 and RLC 862. UE 800a with a target protocol stack of MAC 821, RLC 822, and PDCP 823 switches to target cell (802). Target cell 802 has a DU 807 with a protocol stack of MAC 871 and RLC 872. DU 806 and DU 807 are connected with CU 805. CU 805 has a protocol stack of PDCP 851. When the network decides to perform cell switch from the source DU to the target DU, the PDCP PDUs with SN #7, #8, #9, #10 are not successfully delivered or transmitted to the UE. After cell switch, those PDCP PDUs with SN #7, #8, #9, #10 are retransmitted to the UE by the target cell. For AM RBs, the successful delivery means the RLC ACK for those PDCP PDUs has been received. For UM RBs, Preferably, if those RLC SDUs or RLC SDU segments have not yet been included in an RLC data PDU, or RLC data PDUs that are pending for initial transmission, the associated PDCP PDUs are considered as not transmitted. Preferably, for UM RBs, if HARQ ACK feedbacks are not received for those RLC data PDUs which have been transmitted by lower layer, the associated PDCP PDUs are considered not successfully delivered. Preferably, upon reception of the cell switch command at step 881, the PDCP entity of UE, at step 882, triggers, compiles, and sends a PDCP Status report to inform the target DU which PDCP PDUs are considered as failed. The target DU retransmits the PDCP PDUs which are reported as failed in the PDCP status report.

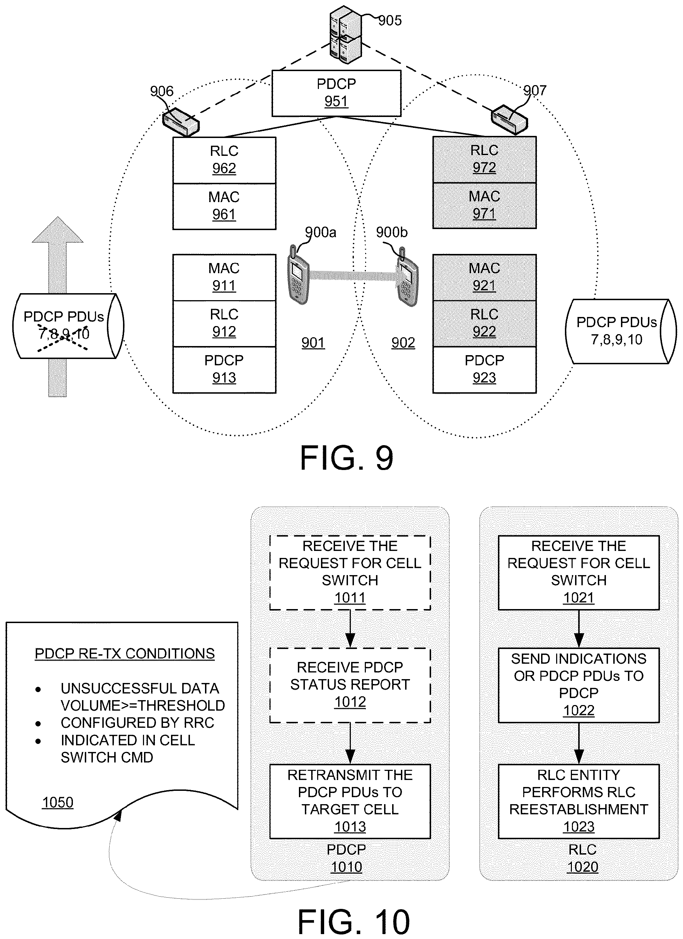

Figure 9 illustrates an exemplary process of UL data transfer for inter-DU inter-cell beam management with mobility from both network and the UE perspective in accordance with embodiments of the current invention. A UE 900a at source cell (901) is configured with source protocol stack of MAC 911, RLC 812 and PDCP 913. Source cell 901 has a DU 906 with a protocol stack of MAC 961 and RLC 962. UE 900a with a target protocol stack of MAC 921, RLC 922, and PDCP 923 switches to target cell (902). Target cell has a DU 907 with a protocol stack of MAC 971 and RLC 972. DU 906 and DU 907 are connected with CU 905. CU 905 has a protocol stack of PDCP 951. When the UE receives the cell switch command to perform cell switch from the source DU to the target DU, the PDCP PDUs with SN #7, #8, #9, #10 have not been successfully delivered or transmitted to the source DU. After cell switch, UE retransmits the PDCP PDUs with SN #7, #8, #9, #10 to the target cell. Preferably, the target DU sends PDCP status report to the UE providing the information which PDCP PDUs are considered as failed. Preferably, the UE itself figures out which PDCP PDUs are not successfully delivered or not transmitted to the source cell. For AM RBs, the successfully delivery means the RLC ACK for those PDCP PDUs has been received. For UM RBs, preferably, if those RLC SDUs or RLC SDU segments have not yet been included in an RLC data PDU, or RLC data PDUs that are pending for initial transmission, the associated PDCP PDUs are considered not transmitted. Preferably, for UM RBs, if HARQ ACK feedbacks are not received for those RLC data PDUs which have been transmitted by lower layer, the associated PDCP PDUs are considered not successfully delivered.

Figure 10 illustrates an exemplary process of UP handling at the UE side for inter-DU inter-cell beam management in accordance with embodiments of the current invention. When the UE receives the cell switch command, the UE performs RLC re-establishment and UL/DL data transfer. Preferably, upon receiving the cell switch command, at step 1021, the RLC entity 1020 receives the request for RLC re-establishment. Before performing RLC re-establishment, the RLC entity 1020 performs additional procedures to help to identify the PDCP PDUs which have not been successfully delivered or not transmitted to the lower layers. The RLC entity 1020 figures out which PDCP PDUs have not been successfully delivered or not transmitted. Preferably, the RLC entity 1020 figures out which PDCP PDUs have not been successfully delivered or not transmitted to the lower layers.

Preferably, at step 1022, the RLC entity 1020 sends those PDCP PDUs (RLC SDUs) which are not successfully delivered back to the PDCP entity 1010. Alternatively or additionally preferably, at step 1022, the RLC entity sends an indication of those PDCP PDUs (RLC SDUs) which are not successfully delivered to PDCP entity 1010. At step 1023, the RLC entity performs RLC reestablishment. Then the PDCP entity 1010 figures out which PDCP PDUs are not transmitted or not successfully delivered. At step 1013, the PDCP entity retransmits the PDCP PDUs to the target cell, which were not successfully delivered or not transmitted to the source DU side before cell switch. Preferably, after reception of the cell switch command at step 1011, the PDCP entity 1010 of UE receives the PDCP status report from the target cell after cell switch (step 1012), based on which UE knows which PDCP PDUs are considered as failed. The PDCP entity 1010, at step 1013, retransmits the PDCP PDUs to the target cell which were reported as failed in the PDCP status report.

In another embodiment 1050, UE self-detected PDCP retransmission involves determining whether to retransmit the one or more source-failed UL PDCP PDUs based on one or more conditions. Preferably, condition is the result of the comparison of a number of source-failed UL PDCP PDUs with a preconfigured source-fail threshold. When UE receives the cell switch command, it calculates the data volume for the PDCP PDUs which are not successfully delivered or not transmitted. If the data volume is less than a threshold, UE does not perform PDCP PDU retransmission after cell switch to the target cell. The threshold can be configured by an RRC signalling from the network or preconfigured by UE/network/operator/rules. Preferably, whether to perform PDCP retransmission to the target cell is configured by RRC signalling. Preferably, whether to perform PDCP retransmission to the target cell is indicated together with the cell switch command.

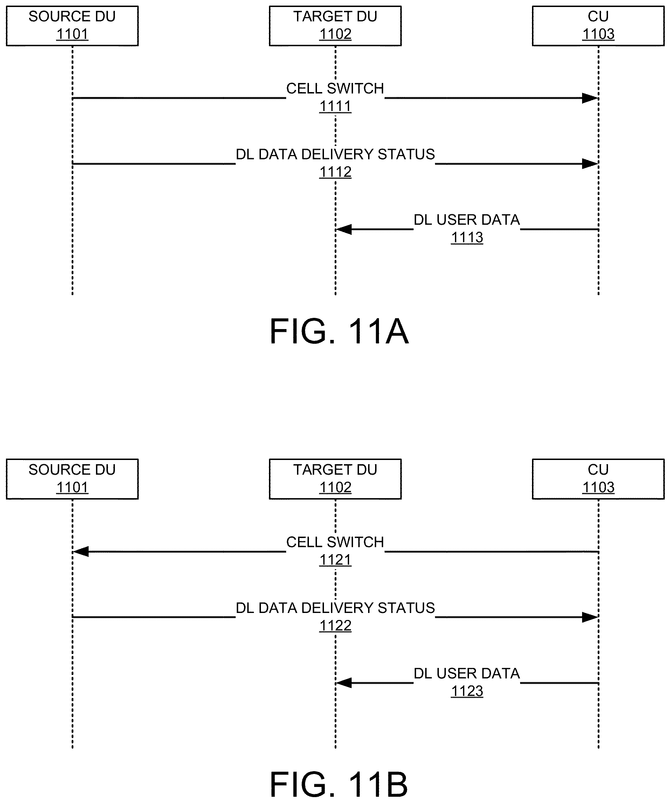

Figure 11A illustrates an exemplary process of source DU initiated DL data transfer at the network side for inter-DU inter-cell beam management in accordance with embodiments of the current invention. The UE is connected with a source DU 1101. A cell switch is determined to handover to a target DU 1102. DU 1101 and DU 1102 are connected with CU 1103. Preferably, the source DU 1101 makes the cell switch decision. At step 1111, source DU 1101 sends the cell switch command to the UE. When network sends the cell switch command to the UE, at step 1112, the source DU 1101 sends DL DATA DELIVERY STATUS to CU 1103. Preferably, the source DU 1101 informs CU 1103 which PDCP PDUs are not successfully delivered. Preferably for UM DRBs, the source DU 1101 informs CU 1103 the highest PDCP PDU SN successfully delivered in sequence to the UE among those PDCP PDUs received from CU 1103. Preferably for UM DRBS, DU 1101 informs CU 1103 the highest PDCP PDU SN transmitted to the lower layers among those PDCP PDUs received from CU 1103. At step 1113, CU 1103 retransmits the PDCP PDUs which are not successfully delivered or not transmitted at the source DU 1101 side to the target DU 1102. The target DU 1102 retransmits those PDCP PDUs to the UE after UE is switched to the target cell.

Figure 11B illustrates an exemplary process of CU-initiated DL data transfer at the network side for inter-DU inter-cell beam management with mobility in accordance with embodiments of the current invention. The UE is connected with a source DU 1101. A cell switch is determined to handover to a target DU 1102. DU 1101 and DU 1102 are connected with CU 1103. Preferably, CU 1103 makes the cell switch decision. At step 1121, source CU 1103 sends the cell switch command to the source DU 1101, which sends the cell switch command to the UE. The same as the source DU initiated cell switch, at step 1122, the source DU 1101 sends DL DATA DELIVERY STATUS to CU 1103. The DL DATA DELIVERY STATUS follows the same rule as described for the DU initiated cell switch in Figure 11A. At step 1123, CU 1103 retransmits the PDCP PDUs which are not successfully delivered or not transmitted at the source DU 1101 side to the target DU 1102. The target DU 1102 retransmits those PDCP PDUs to the UE after UE is switched to the target cell.

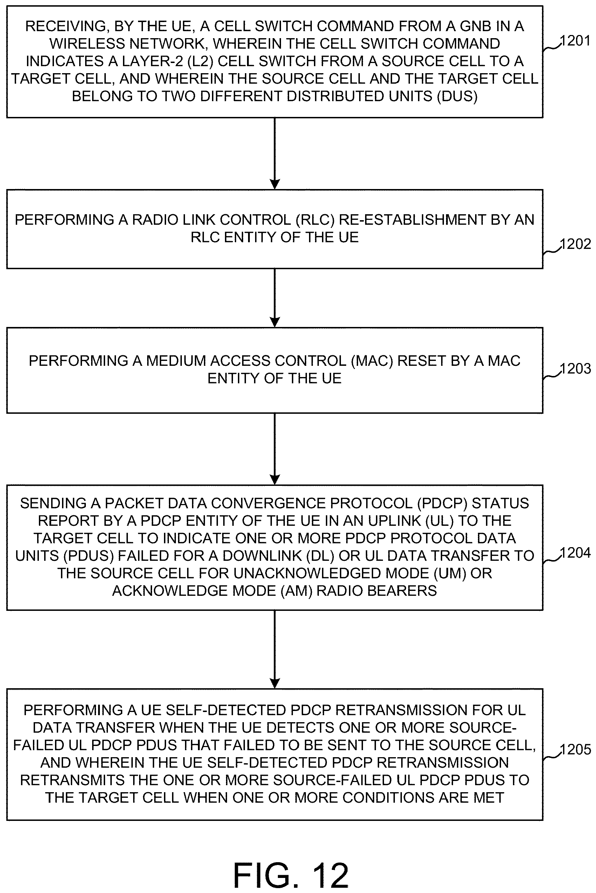

Figure 12 illustrates an exemplary flow chart of inter-DU inter-cell beam management with UE PDCP status report and retransmission in accordance with embodiments of the current invention. At step 1201, the UE receives a cell switch command from a gNB in a wireless network, wherein the cell switch command indicates a layer-2 (L2) cell switch from a source cell to a target cell, and wherein the source cell and the target cell belong to two different DUs. At step 1202, the UE performs an RLC reestablishment by an RLC entity of the UE. At step 1203, the UE performs a MAC reset by a MAC entity of the UE. At step 1204, the UE sends a PDCP status report by a PDCP entity of the UE in an uplink (UL) to the target cell to indicate one or more PDCP protocol data units (PDUs) failed for a downlink (DL) or UL data transfer to the source cell for unacknowledged mode (UM) or acknowledge mode (AM) radio bearers . At step 1205, the UE performs a UE self-detected PDCP retransmission for UL data transfer when the UE detects one or more source-failed UL PDCP PDUs that failed to be sent to the source cell, and wherein the UE self-detected PDCP retransmission retransmits the one or more source-failed UL PDCP PDUs to the target cell when one or more conditions are met.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment, in the following also referred to as UE, comprising:
receiving, by the UE, a cell switch command from a gNB in a wireless network (1201), wherein the cell switch command indicates a layer-2, in the following also referred to as L2, cell switch from a source cell to a target cell, and wherein the source cell and the target cell belong to two different distributed units, in the following also referred to as DUs;
performing a radio link control, in the following also referred to as RLC, re-establishment by an RLC entity of the UE (1202);
performing a medium access control, in the following also referred to as MAC, reset by a MAC entity of the UE (1203) ;
sending a packet data convergence protocol, in the following also referred to as PDCP, status report by a PDCP entity of the UE in an uplink, in the following also referred to as UL, to the target cell to indicate one or more PDCP protocol data units, in the following also referred to as PDUs, failed for a downlink, in the following also referred to as DL, or UL data transfer to the source cell for unacknowledged mode, in the following also referred to as UM, or acknowledge mode, in the following also referred to as AM, radio bearers (1204); and
performing a UE self-detected PDCP retransmission for UL data transfer when the UE detects one or more source-failed UL PDCP PDUs that failed to be sent to the source cell (1205), and wherein the UE self-detected PDCP retransmission retransmits the one or more source-failed UL PDCP PDUs to the target cell when one or more conditions are met.

2. The method of claim 1, wherein the cell switch command is carried by a MAC control element, in the following also referred to as CE, or on a physical downlink control channel, in the following also referred to as PDCCH.

3. The method of claim 2, further comprising:
sending a cell switch indication by the MAC entity of the UE to a radio resource control, in the following also referred to as RRC, entity of the UE upon receiving the cell switch command; and
sending an RRC request by the RRC entity to the PDCP entity and the RLC entity upon receiving the cell switch indication.

4. The method of claim 3, wherein the RLC reestablishment, the PDCP status report, and the UE self-detected PDCP retransmission are triggered by the RRC request from the RRC entity of the UE.

5. The method of claim 3 or 4, wherein the RRC request is sent to the MAC entity, and wherein the MAC reset is triggered by the RRC request.

6. The method of claim 2, further comprising: sending a cell switch indication by the MAC entity of the UE to the RLC entity and the PDCP entity, respectively, and wherein the RLC re-establishment, the PDCP status report, and the UE self-detected PDCP retransmission are triggered by the cell switch indication from the MAC entity of the UE.

7. The method of any one of claims 1 to 6, wherein performing the MAC reset further comprising:
controlling a source timing advance group, in the following also referred to as TAG, associated with the source cell; and
keeping a timeAlignement timer associated with the source cell running.

8. The method of claim 7, wherein performing the MAC reset further comprising: keeping a beamFailureDection timer associated with the source cell running.

9. The method of any one of claims 1 to 8, wherein the UE self-detected PDCP retransmission involves identifying the one or more source-failed UL PDCP PDUs by lower layers of the UE.

10. The method of any one of claims 1 to 9, wherein the one or more conditions comprising at least one of: a data volume of the one or more source-failed UL PDCP PDUs is equal to or greater than a preconfigured threshold, receiving an RRC signalling, and receiving an indication in the cell switch command.

11. The method of any one of claims 1 to 10, wherein the cell switch command further includes an indication to enable or disable the UE self-detected PDCP retransmission.

12. A user equipment (111), in the following also referred to as UE, comprising:
an RF transceiver (163) that transmits and receives radio frequency, in the following also referred to as RF, signal in a wireless network;
a command receiving module (191) that receives a cell switch command from a gNB in the wireless network, wherein the cell switch command indicates a layer-2, in the following also referred to as L2, cell switch from a source cell to a target cell, and wherein the source cell and the target cell belong to two different distributed units, in the following also referred to as DUs;
a radio link control, in the following also referred to as RLC, entity (192) that performs an RLC reestablishment;
a medium access control, in the following also referred to as MAC, entity (193) that performs a MAC reset;
a packet data convergence protocol, in the following also referred to as PDCP, entity (194) that sends PDCP status report in an uplink, in the following also referred to as UL, to the target cell to indicate one or more PDCP protocol data units, in the following also referred to as PDUs, failed for a downlink, in the following also referred to as DL, or UL data transfer to the source cell for unacknowledged mode, in the following also referred to as UM, or acknowledge mode, in the following also referred to as AM, radio bearers; and
a self-detect module (195) that performs a UE self-detected PDCP retransmission for UL data transfer when the UE detects one or more source-failed UL PDCP PDUs that failed to be sent to the source cell, and wherein the UE self-detected PDCP retransmission retransmits the one or more source-failed UL PDCP PDUs to the target cell when one or more conditions are met.

13. The UE of claim 12, wherein the cell switch command is carried by a MAC control element, in the following also referred to as CE, or on a physical downlink control channel, in the following also referred to as PDCCH.

14. The UE of claim 13, further comprising: a radio resource control, in the following also referred to as RRC, entity (177), and wherein the MAC entity sends a cell switch indication to the RRC entity upon receiving the cell switch command, and the RRC entity sends an RRC request to the PDCP entity and the RLC entity upon receiving the cell switch indication.

15. The UE of any one of claims 12 to 14, wherein the MAC reset comprising the MAC entity controls a source timing advance group, in the following also referred to as TAG, associated with the source cell and keeps at least one timer association with the source cell running, and wherein the timer comprising a timeAlignement timer and a beamFailureDection timer.
